# EUROPEAN PATENT SPECIFICATION

(11) **EP 2 430 410 B1**
(45) Date of publication and mention of the grant of the patent: **06.07.2016**
(21) Application number: 10727865.7
(22) Date of filing: 04.05.2010
(51) Int. Cl.: B65B 1/36, B65B 3/00, B65B 3/30, B65B 3/32, B65B 59/04, G01F 11/00, G01F 11/02

(54) **DOSING APPARATUS**
DOSIERVORRICHTUNG
DOSEUR

(30) Priority: 08.05.2009 IT BO20090283; 04.08.2009 IT BO20090521
(43) Date of publication of application: 21.03.2012
(60) Divisional application: 12176048.2
(73) Proprietor: I.M.A. Industria Macchine Automatiche S.p.A., 40064 Ozzano dell'Emilia (BO) (IT)
(72) Inventor: SASSATELLI, Luca, I-40064 Ozzano Emilia (BO) (IT); TREBBI, Claudio, I-40059 Medicina (BO) (IT)
(74) Representative: Crugnola, Pietro
(86) International application number: PCT/IB2010/051949
(87) International publication number: WO 2010/128455

(56) References cited:
- US-A- 3 850 345
- US-A- 4 055 281
- US-A- 4 993 598

## Description

The present invention relates to an apparatus and a dosing unit associable with an automatic filling machine for dispensing preset and precise quantities of product into containers, such as bottles, vials, ampoules and the like.

In the pharmaceutical, cosmetic and food fields it is known to use filling machines for filling different types of dosing devices in function of the products to be dosed.

In the case of fluid products volumetric piston pumps, peristaltic pumps, diaphragm pumps, time-pressure dosing systems, flow-meter dosing systems, mass flowrate meter dosing systems are generally used.

The choice of dosing devices depends on a plurality of factors such as the chemical and physical features of the product to be dosed, dosing volumes, dosing precision and accuracy, the hygiene and sterility requirements of the filling process. For example, in the case of liquid products that must not come into contact with the pump components, typically to avoid contamination, peristaltic pumps or diaphragm pumps or time-pressure dosing systems are used. In the case of more dense and/or viscous liquid products piston pumps are preferable.

Filling machines can also be provided with dosing devices for powder or granule products.

The aforesaid dosing devices are driven by movement means, generally housed inside the filling machine. The movement means provides the required movement, typically a rotational and/or a linear movement, to dosing means of the dosing devices. The dosing means and the movement means are connected by operating means comprising driving shafts and pistons.

In volumetric piston pumps the dosing means comprises a piston driven linearly by the movement means with reciprocating motion inside a dosing chamber so as to suck and subsequently dispense a defined volume of liquid product. In pumps in which the piston also acts as the switching valve, the aforesaid piston is further rotated by the movement means around the longitudinal axis thereof to make the dosing chamber communicate alternatively with a supply conduit and with a delivery conduit.

In diaphragm pumps, the dosing means comprises an elastic membrane that closes a dosing chamber and is moved linearly with reciprocating motion by the movement means by means of a driving shaft.

In peristaltic pumps the dosing means consists of a rotor that is rotated continuously by means of a respective driving shaft by the movement means so as to squeeze a flexible tube in which the fluid is located. By squeezing the tube alternately, the fluid advances in the interior thereof.

In dosing devices for powder products, the dosing means comprises a dosing drum or wheel rotated with reciprocating motion by the movement means by means of a respective driving shaft.

The dosing devices are fixed to the filling machines by appropriate supporting structures that also enable connection to the movement means. Known supporting structures ensure precise and solid support for the dosing devices, but entail laborious and complex mounting and dismantling procedures for which specialised operators are required. Such procedures are even more complex and inconvenient if the dosing devices are associated with filling machines operating in an aseptic or sterile environment and thus provided with containing cabins, which enable the processing zone in which the product is packed to be accessed only through openings provided with gloves ("gloveports").

As each dosing device requires a specific supporting structure, possible replacements of dosing devices of one type with devices of another type are not generally possible in the same filling machine or are possible only after complicated and long adapting and configuration operations. In order to provide a certain production flexibility some filling machines are provided with a plurality of different dosing devices that can be selectively used according to the product to be dosed. Such machines are nevertheless very complex and expensive.

One drawback of known dosing devices consists of the fact that the operating means of the dosing means, i.e. the driving shafts and the pistons, once it has been disengaged from the movement means - for example during conveying or during the procedures of mounting/dismantling of the device - remains unconstrained, is free to move rotationally and/or linearly, thus being able to cause a contextual uncontrolled and undefined movement of the dosing means. In one step of mounting the dosing device on the filling machine, adjusting and/or calibrating steps for the dosing means and/or for the movement means are thus necessary, which procedures are generally very laborious and long.

In the case of volumetric dosing pumps, once the piston has been detached from the movement means it may even disengage from and exit the dosing chamber, with the risk of getting damaged and/or dirty. As the piston thus has to be maintained manually inside the dosing chamber, the procedures for assembling and dismantling known volumetric dosing pumps are particularly complex and long, requiring the use of at least two specialised operators.

US 3850345 discloses a plunger type filling valve, for rotary or other types of filling machines having measuring cylinders, with provision for preventing the loss of product in excess of that required for filling a container if the filling machine is stopped in mid-cycle and a measuring cylinder is open to the container, and with provision for excluding air from the filling charge during both interrupted and normal operation. A valve plunger and a measuring cylinder are arranged side by side, above the container and laterally adjacent the supply tank, with a linear diagonal passage extending downward from the supply tank into the measuring cylinder. Each filling valve is secured to an external pad of the supply tank by means of stud bolts that engage holes provided in a valve block and in a cylinder block of the filling valve. The filling valve is locked to the external pad by tightening nuts coupled to the respective stud bolts.

One object of the present invention is to improve the apparatuses and dosing units that are associable with filling machines.

Another object is to make a dosing apparatus comprising a dosing unit and supporting and locking means that is associable with a filling machine, such as to enable said dosing unit to be mounted and dismantled easy and fast, for example to permit replacement with a dosing unit that is similar or of another type.

A further object is to make a dosing apparatus comprising a dosing unit and supporting and locking means that ensures precise and firm positioning of the dosing unit in an mounting operating configuration.

Still another object is to make a dosing apparatus comprising a dosing unit arranged for being connected to or disconnected from a movement means provided in the filling machine, automatically, without requiring the manual intervention of an operator.

Another further object is to make a dosing unit comprising casing means for supporting and/or containing dosing means, the latter being provided with operating means that can be locked to the casing means in a preset linear and angular position so as to be prevented from being accidentally detached from the aforesaid casing means and at the same time being able to maintain the dosing means fixed in a desired position.

According to the invention a apparatus is provided according to claim 1.

Owing to the apparatus of the invention it is possible to hook and lock a dosing unit, in a rapid and at the same time precise and firm manner, to respective supporting means that is associable in particular with a filling machine. At the same time it is possible to connect the dosing unit to movement means of the machine in a completely automatic manner without requiring the manual intervention of an operator, thus with reduced downtime and less risk of error in mounting. The mounting procedure can be performed by just one operator and is made particularly easy by the shape and dimensions of guiding means of the supporting means and by coupling means of the dosing unit. Fixing means of the supporting means, driven by pressing means, further enables the dosing unit to be locked automatically and without intervention by the operator when the dosing unit has reached the desired position. The procedure for dismantling the dosing unit from the supporting means is similarly easy and rapid, the procedure involving extracting the coupling means manually from the guiding means. A dosing unit is provided.

Owing to the dosing unit provided with casing means that is suitable for supporting and/or containing dosing means provided with operating means, that is linearly drivable along, and/or rotatably drivable around, a first axis, it is possible to lock in a reversible manner the dosing means in a defined linear and angular position and maintain the dosing unit in an assembled condition. In particular, stop means with which the dosing unit is provided enables the operating means to be locked, which comprises pistons, in the case of volumetric dosing pumps, or driving shafts, in the case of peristaltic pumps, diaphragm or membrane pumps, volumetric dosers for powders or granules. The stop means includes a stop pin that is slidingly mounted in a first housing made in the casing means and is movable so as to engage in the assembled condition a second housing made in the operating means. The stop pin can be automatically driven by driving means of the filling machine, or manually by an operator.

It should be noted that the stop means maintains the operating means constrained to the dosing means, thus preventing accidental and undesired detachments of the aforesaid operating means (for example of the piston in the case of a volumetric pump or of the driving shaft in the case of a peristaltic pump). In this manner, procedures for mounting and dismantling the dosing unit are simplified and can be performed by just one operator. The latter can in fact support the dosing unit by means of a gripping portion of the casing means and fix or dismantle the dosing unit to or from the filling machine without worrying about also supporting the operating means, for example the pistons, as usually occurs in known volumetric pumps.

As the dosing means is maintained by the stop means in the assembled condition in a defined angular and/or linear position it is not necessary to perform laborious adjusting and/or calibrating procedures, in a step of mounting and starting up the dosing device on the filling machine, as usually occurs in known dosing units. It is further possible to connect the dosing unit automatically to the movement means by the operating means.

The invention can be better understood and implemented with reference to the attached drawings that illustrate a non-limiting embodiment thereof by way of example in which:
Figure 1 is a partially sectioned front view of the dosing apparatus of the invention in a mounting configuration;
Figure 2 is a partial side view of supporting means of the apparatus in Figure 1;
Figure 3 is a partial section according to line III-III in
Figure 1;

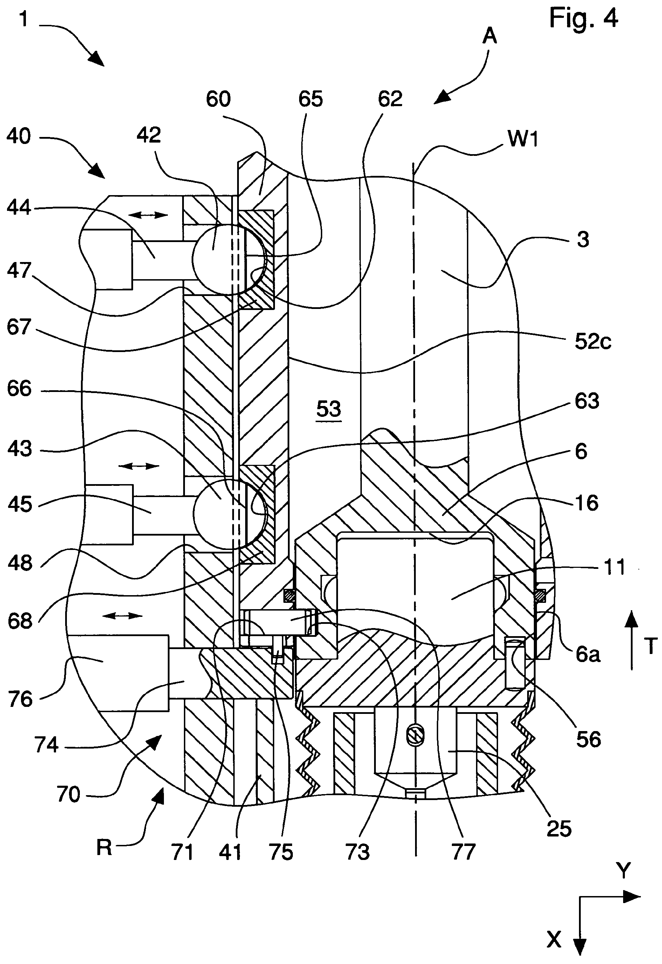

Figure 4 is a partial and enlarged view of the apparatus in

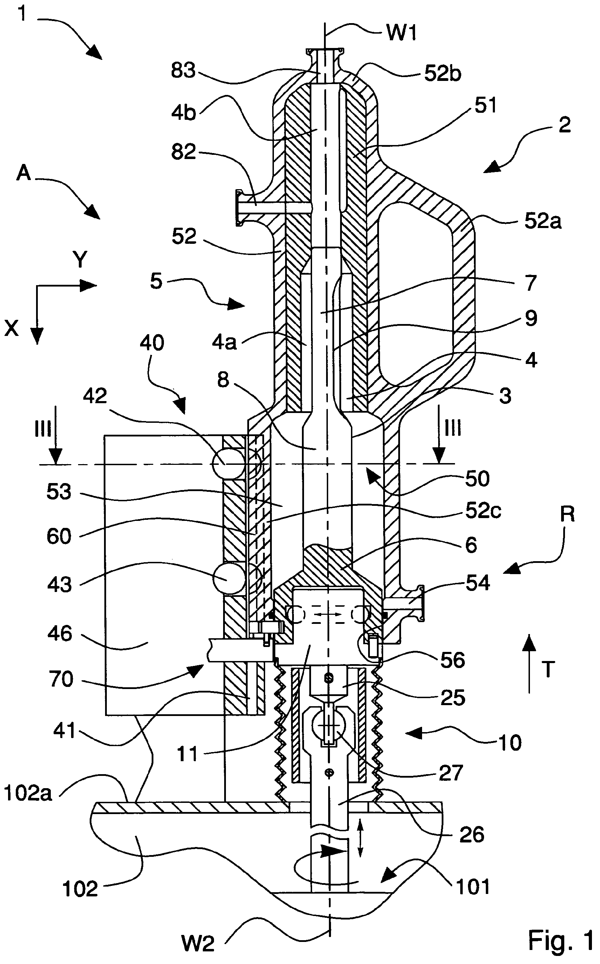

Figure 1, showing a dosing unit associated with supporting means in the mounting configuration;

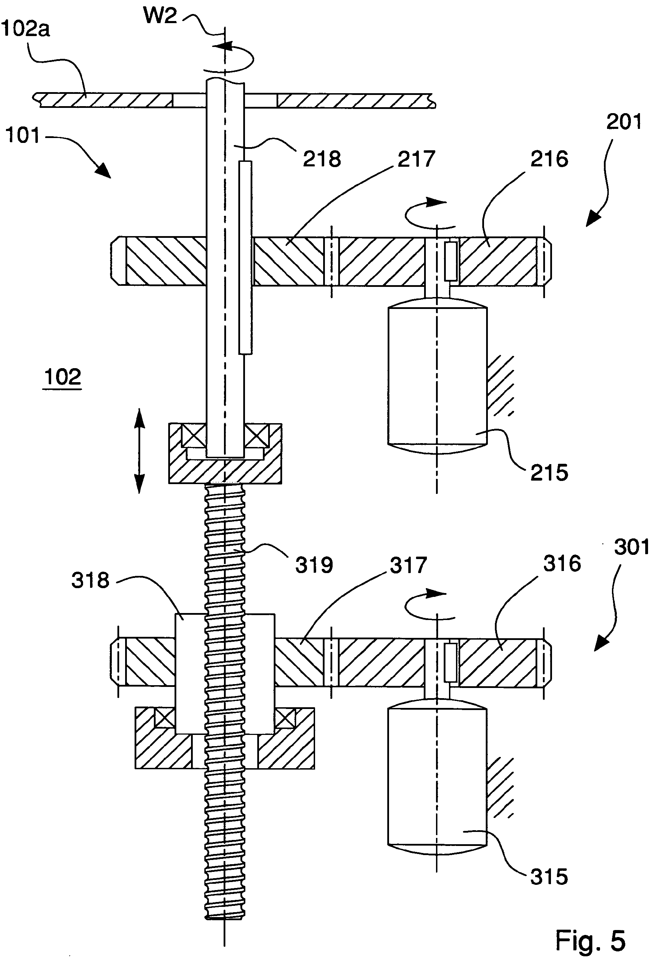

Figure 5 is a schematic and partially sectioned frontal view of movement means of the dosing unit;

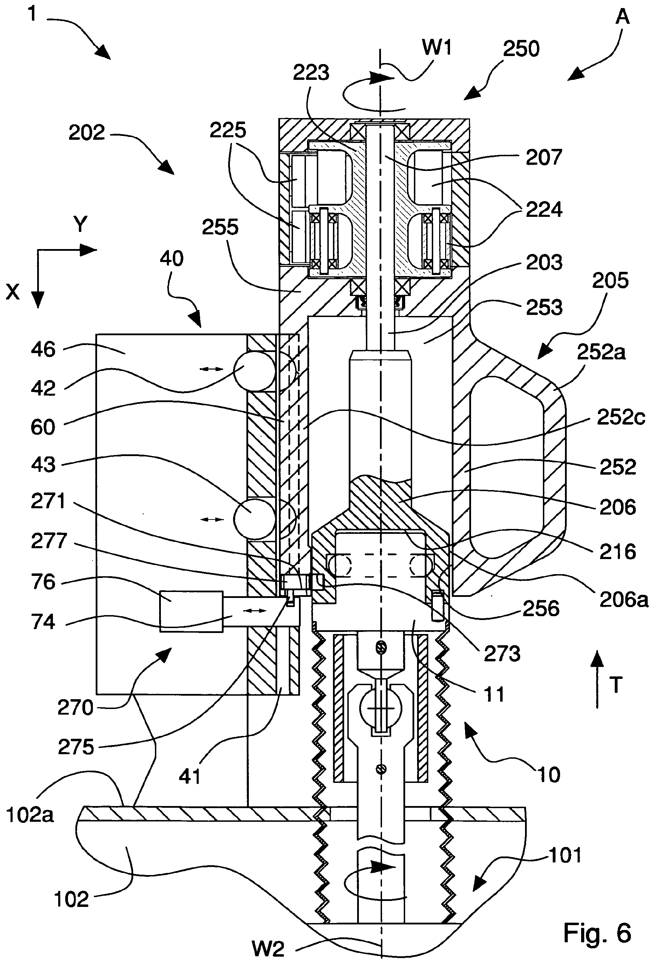

Figure 6 is a partially sectioned frontal view of another embodiment of the dosing apparatus;

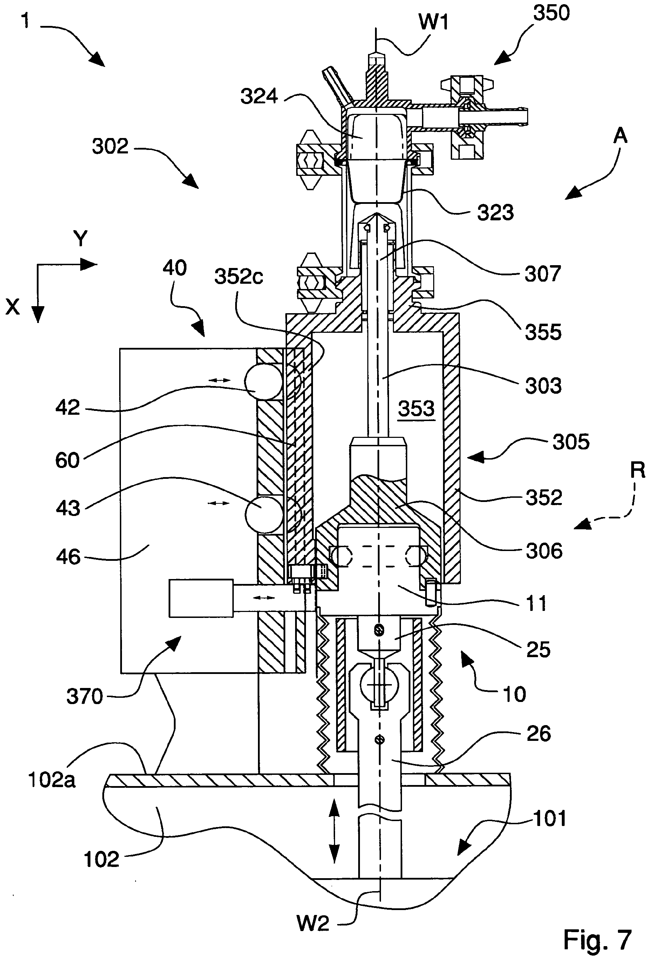

Figure 7 is a partially sectioned frontal view of a further embodiment of the dosing apparatus;

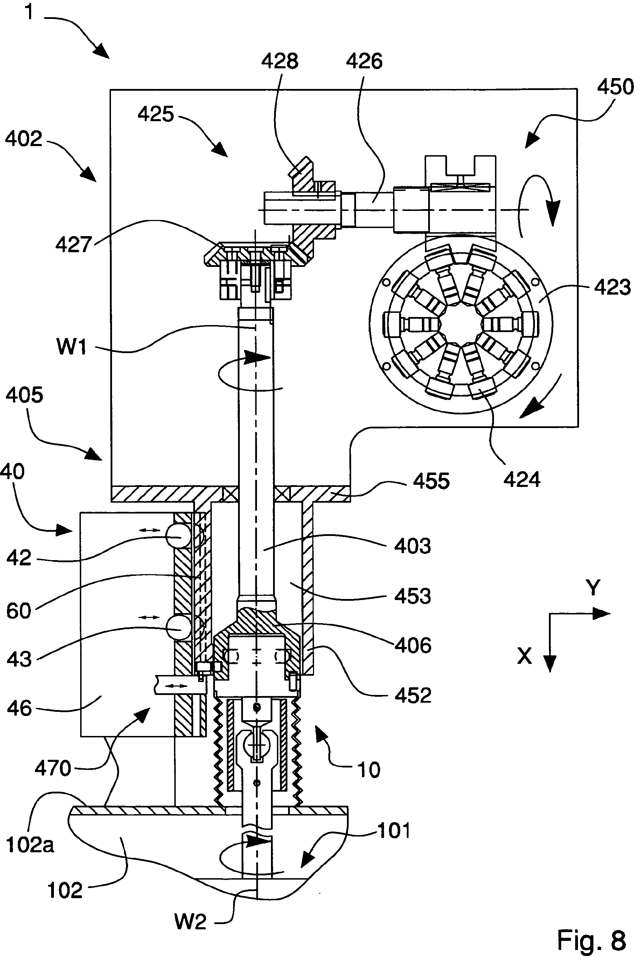

Figure 8 is a partially sectioned frontal view of another embodiment of the dosing apparatus;

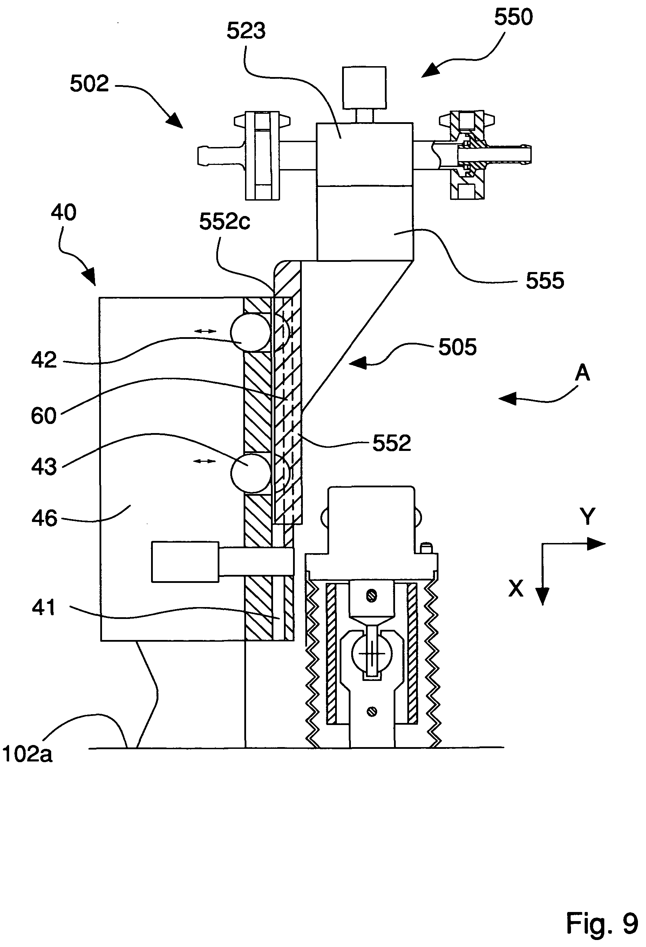

Figure 9 is a partially sectioned frontal view of another further embodiment of the dosing apparatus.

With reference to Figures 1 to 4, a dosing apparatus 1 is illustrated that is associable with a filling machine and comprises a dosing unit 2 and supporting means 40 arranged for supporting and locking said dosing unit 2 in a mounting configuration A. In particular, the supporting means 40 is fixable, for example, to an external wall 102a of a base 102 of the filling machine.

The dosing unit 2 comprises dosing means 50 for dispensing set quantities of product, in particular pharmaceutical product, into containers and casing means 5 arranged for supporting and/or containing the dosing means 50 and removably connecting the dosing unit 2 to the supporting means 40. The dosing means 50 is provided with operating means 3 that is connectable to movement means 101 of the filling machine.

The dosing means may include any of the numerous known dosing devices and systems used in the pharmaceutical and/or foodstuff field, such as, by way of non-limiting example, volumetric piston pumps, peristaltic pumps, diaphragm or membrane pumps, time-pressure dosing systems, flow-control dosing systems, flowrate-meter dosing systems, volumetric dosers for powders, etc.

In the embodiment illustrated in the aforesaid Figures 1 to 4, the dosing means 50 includes, in particular, a volumetric pump in which the operating means comprises piston means 3 that is linearly movable along and rotatably movable around a first longitudinal axis W1 inside a dosing chamber 4 of the casing means 5 for drawing a desired quantity of liquid from an inlet 82 of the casing means 5 and direct the quantity of liquid to an outlet 83 of the casing means 5.

The apparatus 1 further comprises joint means 10 for removably connecting, in said mounting configuration A, a first end portion 6 of the piston means 3 to the movement means 101 arranged for moving said piston means 3 linearly and rotationally.

The first end portion 6 of the piston means 3 is the lower end portion, the dosing unit 2 thus being driven from below by the movement means 101.

The piston means 3 is of the piston-valve type and comprises a second end portion 7 that is opposite the first end portion 6, that is slidable inside the dosing chamber 4 and provided with switching means 9 that makes the dosing chamber 4 communicate with the inlet 82 or with the outlet 83. The piston means 3, driven by the movement means 101, is movable with reciprocating linear motion along the first axis W1 between a retracted or internal position and an extended or external position and is movable with a rotatable motion around the first axis W1, between a sucking position in which the switching means 9 makes the dosing chamber 4 communicate with the inlet 82 and a delivery position in which the switching means 9 connects said dosing chamber 4 with the outlet 83.

The casing means 5 comprises an internal tubular element 51, with a substantially cylindrical shape, inside which the dosing chamber 4 is made and an external covering element 52 that envelops the internal tubular element 51 and extends below the internal tubular element 51 so as to form a lower cavity 53, provided with a respective opening 56 to enable the joint means 10 to pass through. The covering element 52 further comprises a handle-shaped gripping portion 52a to enable the dosing unit 2 to be gripped and handled easily by an operator, in particular during the mounting/dismantling step as explained below in the description.

The dosing chamber 4 has a substantially cylindrical shape and extends longitudinally over the entire length of the internal tubular element 51. The dosing chamber 4 comprises a lower dosing chamber 4a and an upper dosing chamber 4b having different diameters and lengths. In particular, the lower dosing chamber 4a has a greater diameter than of the upper dosing chamber 4b. The upper dosing chamber 4b is flowingly connected with a supply circuit of the product to be dosed by the inlet 82, which consists of a conduit made on side walls of the internal tubular element 51 and of the covering element 52. The upper dosing chamber 4b is further flowingly connected with a delivery circuit for delivering the product by the outlet 83, consisting of a respective conduit made on a top portion 52b of the covering element 52, that closes above the dosing chamber 4, said respective hole being substantially coaxial with the first longitudinal axis W1. The piston means 3 comprises an elongated cylindrical portion that includes an intermediate portion 8 between the first end portion 6 and the second end portion 7, said portions being together coaxial with the first axis W1 and having different diameters and lengths. The intermediate portion 8 is arranged for sealingly sliding inside the lower dosing chamber 4a, whilst the second end portion 7 is arranged for sealingly sliding inside the upper dosing chamber 4b.

The first end portion 6 slides with clearance inside the cavity 53. The first end portion 6 of the piston means 3 comprises a seat 16 configured for removably receiving a clutch portion 11 of the joint means 10, the clutch portion 11 being insertable into and disconnectable from said seat 16 along a coupling direction T that is substantially parallel to said first axis W1. The clutch portion 11 and the seat 16 have a complementary shape, for example cylindrical, and have dimensions that are such as to minimise a residual radial clearance.

The joint means 10 comprises a connecting element 25 that includes the clutch portion 11, and a further connecting element 26 an end portion of which is connected to the movement means 101. The connecting element 25 and the further connecting element 26 are rotatably connected by a spherical element 27. The further connecting element 26 is moved by the movement means 101 along and around a second axis W2. In use the joint means 10 is normally assembled on the movement means 101.

With particular reference to figure 5, the movement means 101 is contained inside the base 102 of the filling machine and comprises first movement means 201 arranged for rotating the piston means 3 and second movement means 301 arranged for linearly moving the piston means 3. More precisely, the first movement means 201 and the second movement means 301 are connected to the further connecting element 26 of the joint means 10, said further connecting element 26 being rotated around and/or moved along the second axis W2 that substantially coincides with the first axis W1. The joint means 10 is nevertheless shaped in such a manner as to ensure correct transmission of motion from the movement means 101 to the piston means 3 even if the first axis W1 is misaligned and/or tilted with respect to the second axis W2, due, for example, to imprecisions in mounting and/or in manufacturing of the dosing unit 2 and/or of the supporting means 40.

In the embodiment illustrated by way of example in figure 5, the first movement means 201 comprises, for example, a first motor 215 that rotates by means of a pair of toothed wheels 216, 217 a driving shaft 218 connected to the further connecting element 26 of the joint means 10.

The driving shaft 218 is further moved linearly along the second axis W2 by the second movement means 301 comprising, for example, a second motor 315 that rotates by means of a pair of further toothed wheels 316, 317 a nut 318 of a leadscrew unit. The rotation of the nut 318 causes the corresponding screw 319 to linearly move that is connected to the movement shaft 218.

Coupling means 60 is associated with casing means 5 and is arranged for slidingly engaging in guiding means 41 of the supporting means 40 in the mounting configuration A of the dosing unit 2.

The coupling means 60 is insertable into, or disconnectable from, the guiding means 41 along a first direction X, that is substantially parallel to the first axis W1. The first direction X is, for example, vertical and substantially orthogonal to the upper wall 102a of the base 102 of the filling machine to which the supporting means 40 can be fixed.

In a version of the apparatus 1 that is not illustrated the first direction X may be, for example, horizontal and substantially orthogonal to the first axis W1.

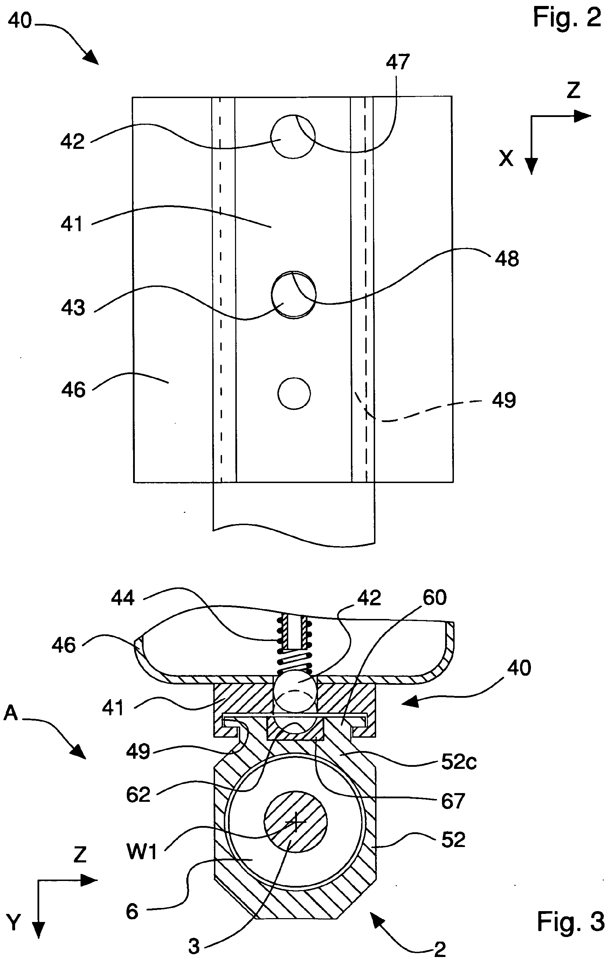

The supporting means 40 includes a supporting body 46 fixed to the upper wall 102a and supporting the guiding means 41. The latter comprises a guiding element, having a flat shape and being provided with a rectilinear groove 49 (visible in figure 3) that has a "T" cross section and extends parallelly to the first direction X.

The coupling means comprises a coupling element 60 that is fixed to the casing means 5 and is "T"-shaped so as to engage slidingly in the rectilinear groove 49 with a preset clearance to enable the dosing unit 2 to be easily mounted on and dismantled from the supporting means 40. The coupling element 60 is, for example, made directly on a side wall of a lower cylindrical portion 52c of the covering element 52. Alternatively, the coupling element 60 can be a distinct element and be fixed to the aforesaid side wall of the lower cylindrical portion 52c.

The supporting means 40 further comprises fixing means 42, 43 arranged for reversibly locking the coupling element 60 on the guiding means 41. The fixing means comprises at least a first fixing element 42 and a second fixing element 43 that are associated with guiding means 41 and are movable so as to engage with or disengage from respective coupling notches 62, 63 (visible in figure 4) of the coupling element 60 respectively for locking or releasing the coupling means on or from the guiding means 41.

Pushing means 44, 45 is provided for acting on the fixing elements 42, 43 and pushing the latter to abut on the coupling notches 62, 63 with a preset fixing force along a second direction Y that is substantially orthogonal to the first direction X.

With reference to the embodiment illustrated in the figures, the fixing means comprises a first fixing element 42 and a second fixing element 43 having a spherical shape and inserted respectively into a first opening 47 and into a second opening 48 that are aligned and overlapped with respect to the first direction X in the guiding means 41. The first fixing element 42 and the second fixing element 43 are maintained protruding by the pushing means 44, 45 so as to engage respectively the first coupling notch 62 and the second coupling notch 63 of the coupling element 60 in the mounting configuration A.

The pushing means comprises actuating means, in particular a first actuator 44 and a second actuator 45, for example of the pneumatic or mechanical type, that are connected respectively to the first fixing element 42 and to the second fixing element 43. By activating the actuators 44, 45, it is possible to place the fixing elements 42, 43 alternatively in the retracted position or in the protruding position, in which the fixing force is applied by the fixing elements 42, 43 to the coupling notches 62, 63.

The actuators may further comprise, as illustrated in Figure 3, first elastic means 44 acting on the first fixing element 42 and second elastic means 45 acting on the second fixing element 43. The first elastic means 44 and the second elastic means 45 comprise, for example, respective coil springs.

The first opening 47 and the second opening 48 are provided with stop portions that are not illustrated in the figures, to prevent the fixing elements 42, 43 from completely exiting from the opening 47, 48, i.e. to enable the fixing elements 42, 43 to protrude by a preset amount.

The coupling notches 62, 63 have a spherical cap shape with a curvature radius that is less than the curvature radius of the fixing elements 42, 43 such as to make the latter abut along respective substantially annular contact surfaces 65, 66.

The first opening 47 comprises a cylindrical hole having a diameter that is such as to house the first fixing element 42 with a very reduced radial clearance.

When the first fixing element 42 abuts on the first coupling notch 62 and pushes the coupling element 60 against the rectilinear groove 49 along the second direction Y, the dosing unit 2 is locked in a firm and precise manner, prevented from moving in the first direction X, in the second direction Y and in a third direction Z orthogonal to the first direction X and to the second direction Y. The second opening 48 on the other hand comprises a through slot that is elongated in the first direction X to enable the second fixing element 43 to be adapted to the position of the second coupling notch 63 and to compensate for variations in distance between the latter and the first coupling notch 62 along the first direction X. When the second fixing element 43 abuts on the second coupling notch 63 and pushes the coupling element 60 against the rectilinear groove 49, the rotation of the dosing unit 2 around an axis that is parallel to the direction Y and passes through at the first fixing element 42 is also locked.

The first coupling notch 62 and the second coupling notch 63 are made in corresponding inserts 67, 68 of metallic material incorporated into the coupling element 60 to ensure greater stiffness and indeformability for the aforesaid coupling notches 62, 63 and greater precision and resistance in the abutment with the fixing elements 42, 43.

The dosing unit 2 further comprises stop means 70 arranged for preventing or enabling the piston means 3 to slide inside the dosing chamber 4 along the first axis W1. In particular, the stop means 70 locks the piston means 3 with respect to the casing means 5 in a preset linear and angular position, so as to maintain the dosing unit 2 in an assembled condition R that is necessary for conveying and for mounting on and dismantling the dosing unit 2 from the joint means 10.

The stop means 70 comprises, in particular, a stop pin 77 that is slidingly mounted in a first housing 71, which is made on a side wall of the lower cylindrical portion 52c of the covering element 52 and arranged for engaging a second housing 73, obtained on an external wall 6a of the first end portion 6 of the piston means 3, at the opening of the seat 16.

The first housing 71 is made at the opening 56 of the cavity 53, adjacent to the coupling element 60 and facing the guiding means 41.

The second housing 73 comprises a hole having dimensions that are substantially equivalent to those of the stop pin 77.

The stop pin 77 is movable parallelly to the second direction Y, i.e. perpendicularly to the first axis W1 and is moved by driving means 76 associated with supporting means 40 between a retracted position and an extended position. In the retracted position the stop pin 77 is contained completely in the first housing 71, so as not to interact with the first end portion 6 and to enable the piston means 3 to be moved. In the extended position, the stop pin 77 is inserted into the second housing 73 and prevents the piston means 3 from moving along, and rotating around the first axis W1, determining the assembled condition R of the dosing unit 2.

A driving pin 75, fixed transversely to the stop pin 77, is engaged by a driving stem 74 of the driving means 76. The driving stem 74 is parallel to the stop pin 77 and is driven by linear actuating means, comprising for example a pneumatic cylinder. The driving stem 74 is provided with a respective radial groove that is suitable for receiving the driving pin 75.

In an embodiment of the dosing unit 2, which is not illustrated in the figures, the first housing 71 is made on a side of the lower cylindrical portion 52c that is opposite the coupling element 60 and opposite the guiding means 41 to enable an operator to drive the stop pin 77 manually between the extended position and the retracted position and thus lock or unlock the piston means 3. In this embodiment, the second housing 73 is made on the external wall 6a of the first end portion 6 and faces the first housing 71.

In a mounting step of the dosing unit 2 to the supporting means 40, the operator supports the dosing unit 2, arranged in the assembled condition R, by means of the gripping portion 52a and inserts the coupling element 60 inside the guiding means 41 along the first direction X. The clearance existing between the coupling element 60 and the rectilinear groove 49 of the guiding means 41 permits easy and rapid insertion.

With the fixing elements 42, 43 maintained in a retracted position by the respective actuators 44, 45 inside the respective openings 47, 48, the coupling element 60 slides inside the guiding means 41 until it reaches a final position in which the aforesaid fixing elements 42, 43, pushed by the respective actuators 44, 45 into a protruding position abuts on the respective coupling notches 62, 63, locking the dosing unit 2 in position in the mounting configuration A. In this configuration, the driving pin 75 of the stop pin 77 is housed in the radial groove of the driving stem 74. By performing the operation in the opposite manner, i.e. by extracting the coupling element 60 from the guiding means 41, with the fixing elements 42, 43 in a retracted position owing to the respective actuators 44, 45, it is possible to dismantle the dosing unit 2 from the supporting means 40. Once the dosing unit 2 has been inserted into the supporting means 40, the stop pin 77 still maintains the piston means 3 fixed to the casing means 5, locked in the assembled condition R in a preset linear and angular position, to enable the movement means 101 to move the joint means 10 along the second axis W2 until the clutch portion 11 is inserted into the seat 16 of the first end portion 6.

Once the clutch portion 11 has been inserted into the seat 16, the stop pin 77 is disengaged from the piston means 3. In particular, the driving means 76 is activated to move the stop pin 77 in the retracted position so as to enable the piston means 3 to move freely.

In one version of the apparatus which is not illustrated in the figures, the stop pin 77 is engaged in a third housing made in the guiding means 41, to prevent the coupling element 60 from sliding, i.e. the dosing unit 2 from being extracted from the supporting means 40.

Owing to the dosing apparatus 1 of the invention it is thus possible to hook and lock the dosing unit 2 rapidly, easily and at the same time precisely and firmly to and from the supporting means 40. It is important to note that the mounting procedure can be performed by just one operator and is made particularly easy by the shape and the dimensions of the guiding means 41 and of the coupling means 60, which are provided with clearance. The fixing elements 42, 43 driven by the respective actuators 44, 45 further enable the dosing unit 2 to be locked automatically when it has reached the desired position.

The entire mounting operation is made even easier by virtue of the stop means 70 that, in the assembled condition R, fixes the piston means 3 to the casing means 5. In this manner the operator can support the dosing unit 2 by means of the gripping portion 52a and insert the coupling element 60 inside the guiding means 41 along the first direction X without worrying about also supporting the piston means 3, as usually occurs in known volumetric piston pumps. It should be noted that also the disengagement of the stop means 70 from the piston means 3, to enable the piston means 3 to be moved in the dosing chamber 4, occurs automatically by means of the driving means 76. The procedure from dismantling the dosing unit 2 from the supporting means 40 is similarly easy and rapid and occurs by manually extracting the coupling means 60 from the guiding means 41 along the first direction X.

It should be observed that the stop means 70, by locking the piston means 3 - and thus the dosing means 50 - in a defined linear and angular position in the assembled condition, in addition to preventing accidental and undesired detachments of the aforesaid piston means 3, enables laborious adjusting and/or calibrating procedures to be avoided, in a mounting and start up step, as usually occurs in known dosing units. It is further possible to connect the piston means 3 to the joint means 10 automatically.

Figure 6 illustrates an embodiment of the dosing apparatus 1 of the invention that differs from the embodiment disclosed above only for the dosing unit 202 that includes dosing means 250 comprising a peristaltic pump, of known type, rotated by operating means 203 comprising a driving shaft that is rotatably movable around the first axis W1 and is removably connected to the movement means 101 by the joint means 10. In particular, in the mounting configuration A of the dosing unit 202 to the supporting means 40, a first end portion 206 of the shaft 203 is connected to the movement means 101, whilst a second end portion 207 of the shaft 203, which is opposite the first end portion 206, is connected to the peristaltic pump 250. The latter comprises a rotor 223 that is mounted on the second end portion 207 and provided with rollers 224 arranged for squeeze one or more dosing tubes 225 for dosing the product.

During operation, the shaft 203, which is rotated around the first axis W1 by the movement means 101, rotates the rotor 223, the rollers 224 of which squeeze the tubes 225 in which the fluid product is present, causing the advancing of the fluid product and thus dispensing it into the containers. The first end portion 206 of the shaft 203 comprises a seat 216 configured for removably receiving the clutch portion 11 of the joint means 10, the clutch portion 11 being insertable into and disconnectable from, said seat 216 along the coupling direction T.

Casing means 205 of the dosing unit 202 comprises a first element 252, for example of cylindrical tubular shape, provided with an internal cavity 253 that is suitable for containing the first end portion 206 of the shaft 203 and a second element 255 that supports and contains the dosing means 250. The cavity 253 is provided with a lower opening 256 for the passage of the joint means 10.

The first element 252 and the second element 255 of the casing means 205 can be made in a single body.

In a version of the apparatus, which is not illustrated in the figures, the first element 252 of the casing means 205 comprises a connecting wall to the supporting means 40 that has a substantially flat shape. The casing means 205 further comprises a gripping portion 252a fixed for example to the first element 252 and shaped as a handle that enables the dosing unit 202 to be easily gripped and handled by an operator.

The coupling means 60 comprises a coupling element made directly on a side wall 252c of the first element 252 of the casing means 205. Alternatively, the coupling element 60 can be an element that is distinct and fixed to the aforesaid side wall 252c.

In the embodiment illustrated in Figure 6, the stop means 270 locks the shaft 203 to the casing means 205 in a preset linear and angular position, so as to maintain the dosing unit 203 in an assembled condition R that is necessary for correct connection to the joint means 10 and to prevent free and undesired rotation of the rotor 223 of the dosing means 250.

The stop means 270 comprises, in particular, a stop pin 277 that is slidingly mounted in a first housing 271, made on the side wall 252c of the first element 252 of the casing means 205, and arranged for engaging a second housing 273, made on an external wall 206a of the first end portion 206, at the opening of the seat 216.

The first housing 271 is made at the opening 256 of the cavity 253 adjacent to the coupling element 60 and facing the guiding means 41.

The second housing 273 comprises a hole having dimensions that are substantially equivalent to those of the stop pin 277. The stop pin 277 is movable parallelly to the second direction Y, i.e. perpendicularly to the first axis W1 and is moved by the driving means 76 of the supporting means 40 between a retracted position and an extended position. In the retracted position the stop pin 277 is contained completely in the first housing 271 so as not to interact with the first end portion 206 and to enable the shaft 203 to be moved. In the extended position, the stop pin 277 is inserted into the second housing 273 and prevents the shaft 203 from moving along and rotating around the first axis W1, thus determining the assembled condition R of the dosing unit 202.

A driving pin 275, fixed transversely to the stop pin 277, is engaged by a driving stem 74 of the driving means 76. The driving stem 74 is parallel to the stop pin 277 and is driven by linear actuating means, comprising, for example, a pneumatic cylinder. The driving stem 74 is provided with a respective radial groove that is suitable for receiving the driving pin 275.

In an embodiment of the dosing unit 202, which is not illustrated in the figures, the first housing 271 is made on a side of the lower cylindrical portion 252c that is opposite the coupling element 60 and opposite the guiding means 41 to enable an operator to drive the stop pin 277 manually between the extended position and the retracted position and thus lock or unlock the shaft 203 manually. In this embodiment, the second housing 273 is clearly made on the external wall 206a of the first end portion 206 facing the first housing 271.

In a mounting step of the dosing unit 202 to the supporting means 40, the operator supports the dosing unit 202, arranged in the assembled condition R, by means of the gripping portion 252a and inserts the coupling element 60 inside the guiding means 41 along the first direction X. As in the embodiment in figures 1-4, with the fixing elements 42, 43 maintained in a retracted position by the respective actuators 44, 45 inside the respective openings 47, 48, the coupling element 60 slides inside the guiding means 41 until it reaches a final position in which the aforesaid fixing elements 42, 43, pushed by the respective actuators 44, 45 in a protruding position, abut on the respective coupling notches 62, 63 locking in position the dosing unit 2 in the mounting configuration A.

Sliding the dosing unit 202 downwards also entails inserting the clutch portion 11 of the joint means 10 inside the seat 216 of the first end portion 206 to enable subsequent transmission of the rotation movement that is necessary for driving the peristaltic pump 250. For this purpose, the joint means 10 is preventively positioned by the second movement means 301 in a preset "zero" or hooking position, depending on the structural and dimensional features of the dosing unit 202. Alternatively, the joint means 10 can be arranged at the beginning of the mounting step in a disengaged position, suitably spaced away from the shaft 203.

Subsequently, once the dosing unit 202 has been locked to the supporting means 40 in the mounting configuration A, the second movement means 301 can be driven so as to move the joint means 10 along the second axis W2 until the clutch portion 11 is inserted inside the seat 216 of the first end portion 206. In this step the stop means 270, which locks the shaft 203 to the casing means 205, enables the shaft 203 to be coupled with the joint means 10 with a preset and correct angular adjusting.

Once the clutch portion 11 has been engaged and locked in the seat 216, the stop means 270 is disengaged from the shaft 203 to enable the shaft 203 to rotate freely.

Figure 7 illustrates another embodiment of the dosing apparatus 1 of the invention comprising dosing unit 302 that includes the dosing means 350 comprising a membrane or diaphragm pump, of known type, arranged for dosing fluid products. The membrane pump 350 is driven by operating means 303 comprising a respective driving shaft, that is movable linearly with reciprocating motion along the first axis W1 and is removably connected to the movement means 101 by the joint means 10. In particular, the shaft 303 comprises a first end portion 306 arranged for removably coupling with the joint means 10 and a second end portion 307 that acts on a membrane 323 that closes a side of a dosing chamber 324.

Alternatively, the dosing unit 302 may comprise a lever and crank system or a cam system to transform a rotating movement provided by the shaft 303 into a reciprocating linear movement. Also in this embodiment, the dosing unit 302 includes casing means 305 comprising a first element 352, for example of cylindrical tubular shape, that comprises a chamber 353 that is suitable for containing the first end portion 306 of the shaft 303 and a second element 355 that supports the dosing means 350.

The coupling means 60 arranged for slidingly engaging in guiding means 41 of the supporting means 40 in the mounting configuration A of the dosing unit 302 is associated with a side wall 352c of the first element 352 of the casing means 305.

The dosing unit 302 comprises stop means 370 that is substantially identical to the stop means 270 of the embodiment disclosed above.

The aforesaid stop means 370 locks the shaft 303 to the casing means 305 in a preset linear and angular position to enable the shaft 303 to be connected correctly to the joint means 10.

With particular reference to Figure 8, there is illustrated a further embodiment of the dosing apparatus 1 of the invention that differs from the previously disclosed embodiments through the fact of comprising a dosing unit 402 provided with dosing means 450 comprising a volumetric doser for power or granule products.

The doser 450, which is of known type and is schematically illustrated in figure 8, includes a dosing drum 423 provided with a plurality of radial dosing chambers 424 that are suitable for drawing a powder product from a hopper, which is not illustrated, and then for releasing the product in the containers. The dosing drum 423 is rotated by operating means, comprising a driving shaft 403, by respective transmission means 425. The latter comprise, for example, a second shaft 426 that rotates the dosing drum 423 and is in turn rotated by the shaft 403 by means of a pair of bevel gears 427, 428.

The casing means 405 comprises a first element 452, with which the coupling means 60 is associated, and a second element 455 that supports and contains the dosing means 450, i.e. the dosing drum 423 and the respective transmission means 425.

The first element 452 of the casing means 405 is, for example, of cylindrical tubular shape and comprises a chamber 453 that contains a first end portion 406 of the shaft means 403 that is intended for being coupled with the joint means 10. The dosing unit 402 comprises stop means 470 that is substantially identical to the stop means 270, 370 of the versions disclosed above. The aforesaid stop means 470 locks the shaft 403 on the casing means 405 in a preset linear and angular position to enable the shaft 403 to be connected correctly to the joint means 10.

Figure 9 illustrates another further embodiment of the dosing apparatus 1 of the invention in which the dosing unit 502 includes dosing means 550 that does not require driving by the movement means (which is not illustrated for this reason). This dosing means comprises dosing systems of known type such as, for example, dosing systems with time-pressure operation, flow-control dosing system, flowrate meter dosing systems etc.

In the embodiment illustrated the dosing means 550 is of the time-pressure type and in particular comprises one or more dosing valves 523 that regulate the flowrate of a fluid to be dispensed in the containers and coming from a pressurised reservoir that is not illustrated. As known, by managing the relation between reservoir pressure and opening time of the dosing valves 523 it is possible to dose set quantities of product.

The dosing unit 502 includes casing means 505 comprising a first element 552, for example of a substantially flat shape, and a second element 555 to which the dosing valves 523 are fixed. The coupling means 60 arranged for slidingly engaging in guiding means 41 of the supporting means 40 in the mounting configuration A of the dosing unit 502 is fixed to a side wall 552c of the first element 552. The first element 552 and the second element 555 are made, for example, in a single body.

The dosing units that are disclosed above by way of non-limiting example refer to the dosing devices and/or systems that are most commonly used in the pharmaceutical and/or food fields. Nevertheless, it is clear that the dosing apparatus of the invention can include dosing units having any type of dosing means.

## Claims

1. Apparatus comprising a dosing unit (2; 202; 302; 402; 502), provided with casing means (5; 205; 305; 405; 505) for supporting and/or containing dosing means (50; 250; 350; 450; 550), supporting means (40), that is associable in particular with a filling machine, for supporting and locking said dosing unit (2; 202; 302; 402; 502) in a mounting configuration (A), and coupling means (60) that is associated with said casing means (5; 205; 305; 405; 505) and slidingly insertable into or disconnectable from guiding means (41) of said supporting means (40) along a first direction (X), said supporting means (40) comprising fixing means for locking said coupling means (60) to said guiding means (41) in said mounting configuration (A), wherein said fixing means comprises fixing elements (42, 43) that are associated with said guiding means (41) and are selectively movable in such a manner as to engage with or disengage from respective coupling notches (62, 63) of said coupling means (60) respectively for locking said coupling means (60) to said guiding means (41) or releasing said coupling means (60) from said guiding means (41) and wherein it comprises pushing means (44, 45) arranged for pushing said fixing elements (42, 43) in abutment to respective coupling notches (62, 63) with a preset fixing force along a second direction (Y), said second direction (Y) being transverse to said first direction (X).

2. Apparatus according to claim 1, wherein said guiding means (41) comprises a groove (49) having a shaped cross section and extending parallelly to said first direction (X), said coupling means (60) comprising a coupling element associated with said casing means (5; 205; 305; 405; 505) and shaped so as to engage slidingly in said groove (49).

3. Apparatus according to claim 2, wherein said coupling means (60) is obtained on a side wall of said casing means (5; 205; 305; 405; 505).

4. Apparatus according to any preceding claim, wherein said casing means (5; 205) comprises a gripping portion (52a; 252a) to enable said dosing unit (2; 202) to be gripped and handled easily by an operator.

5. Apparatus according to any preceding claim, wherein said fixing means comprises a first fixing element (42) and a second fixing element (43) slidingly inserted respectively into a first opening (47) and into a second opening (48) of said guiding means (41), one of said openings (47, 48) being shaped so as to enable the respective fixing element (43) to move along said first direction (X).

6. Apparatus according to claim 5, wherein said first opening (47) and said second opening (48) are aligned on said first direction (X).

7. Apparatus according to any preceding claim, wherein said fixing elements (42, 43) abut on the corresponding coupling notches (62, 63) along respective contact surfaces (65, 66) that are substantially annular such as to lock said dosing unit (2; 202; 302; 402; 502) to said supporting means (40).

8. Apparatus according to any preceding claim, wherein said dosing means (50; 250; 350; 450; 550) comprises one between a volumetric piston pump, a peristaltic pump, a diaphragm or membrane pump, a time-pressure dosing system, a flow-control dosing system, a flowrate metre dosing system, a volumetric dosing system for powders or granules.

9. Apparatus according to any preceding claim, wherein said dosing means (50; 250; 350; 450; 550) comprises operating means that is movable linearly along, and/or rotatably around, a first axis (W1), said operating means being connectable to and drivable by movement means (101), in particular associated with said filling machine.

10. Apparatus according to claim 9, wherein said operating means comprises piston means (3) that is movable linearly along, and/or rotatably around, a first axis (W1) inside a dosing chamber (4) of said casing means (5) for drawing a desired quantity of fluid from an inlet (82) of said casing means (5) and direct said quantity of fluid to an outlet (83) of said casing means (5).

11. Apparatus according to claim 9 or 10, wherein said first direction (X) is substantially parallel to said first axis (W1).

12. Apparatus according to any one of claims 9 to 11, comprising joint means (10) for removably connecting a first end portion (6; 206; 306; 406) of said operating means to said movement means (101).

13. Apparatus according to any one of claims 9 to 12, wherein said movement means (101) comprises first movement means (201) arranged for rotating said operating means around said first axis (W1) and/or second movement means (301) arranged for linearly moving said operating means along said first axis (W1).

14. Apparatus according to any one of claims 9 to 13, comprising stop means (70; 270; 370; 470) for reversibly locking said operating means to said casing means (5; 205; 305; 405) in a defined linear and angular position and maintaining said dosing unit (2; 202; 302; 402; 502) in an assembled condition (R).

15. Apparatus according to claim 14, wherein said stop means (70; 270; 370; 470) comprises a stop pin (77; 277) that is slidingly mounted in a first housing (71; 271) of said casing means (5; 205; 305; 405) and is movable so as to engage in said assembled condition (R) a second housing (73; 273) made in said operating means.

## Patentansprüche

1. Apparatur, die Folgendes aufweist, nämlich eine Dosiereinheit (2; 202; 302; 402; 502), versehen mit Gehäusemitteln (5; 205; 305; 405; 505) zum Tragen und/oder Aufnehmen von Dosiermitteln (50; 250; 350; 450; 550), ein Trägermittel (40), das insbesondere einer Befüllmaschine zuordenbar ist, um die Dosiereinheit (2; 202; 302; 402; 502) in einer Montagekonfiguration (A) zu tragen und anzubinden, und ein Kopplungsmittel (60), das den Gehäusemitteln (5; 205; 305; 405; 505) zugeordnet und gleitend einsetzbar ist in oder lösbar ist von Führungsmitteln (41) des Trägermittels (40) entlang einer ersten Richtung (X), wobei die Trägermittel (40) Fixierungsmittel aufweisen, um das Kopplungsmittel (60) an die Führungsmittel (41) in der Montagekonfiguration (A) anzubinden, wobei die Fixierungsmittel Fixierungselemente (42, 43) aufweisen, die den Führungsmitteln (41) zugeordnet sind und wahlweise auf solche Art beweglich sind, so dass sie mit jeweiligen Kopplungsaussparungen (62, 63) des Kopplungsmittels (60) in Eingriff stehen oder sich von diesen lösen, bzw. um das Kopplungsmittel (60) an die Führungsmittel (41) anzubinden oder um das Kopplungsmittel (60) von den Führungsmitteln (41) zu lösen, und wobei sie Schiebemittel (40, 45) aufweisen, die eingerichtet sind, um die Fixierungselemente (42, 43) in Anschlag zu jeweiligen Kopplungsaussparungen (62, 63) mit einer vorgegebenen Fixierungskraft entlang einer zweiten Richtung (Y) zu schieben, wobei die zweite Richtung (Y) quer zu der ersten Richtung (X) verläuft.

2. Apparatur gemäß Anspruch 1, wobei die Führungsmittel (41) eine Rinne (49) mit einem geformten Querschnitt aufweist, die sich parallel zu der ersten Richtung (X) erstreckt, wobei das Kopplungsmittel (60) ein Kopplungselement aufweist, das den Gehäusemitteln (5; 205; 305; 405; 505) zugeordnet ist und derart geformt ist, dass es gleitend in die Rinne (49) eingreift.

3. Apparatur gemäß Anspruch 2, wobei das Kopplungsmittel (60) auf einer Seitenwand der Gehäusemittel (5; 205; 305; 405; 505) vorgesehen ist.

4. Apparatur gemäß einem der vorherigen Ansprüche, wobei die Gehäusemittel (5; 205) ein Greifteil (52a; 252a) aufweisen, um die Dosiereinheit (2; 202) von einer Bedienperson einfach greifen und handhaben zu können.

5. Apparatur gemäß einem der vorherigen Ansprüche, wobei die Fixierungsmittel ein erstes Fixierungselement (42) und ein zweites Fixierungselement (43) aufweisen, die jeweils gleitend in eine erste Öffnung (47) und in eine zweite Öffnung (48) der Führungsmittel (41) eingesetzt sind, wobei eine der Öffnungen (47, 48) derart geformt ist, um es dem jeweiligen Fixierungselement (43) zu ermöglichen, sich entlang der ersten Richtung (X) zu bewegen.

6. Apparatur gemäß Anspruch 5, wobei die erste Öffnung (47) und die zweite Öffnung (48) in einer ersten Richtung (X) ausgerichtet sind.

7. Apparatur gemäß einem der vorherigen Ansprüche, wobei die Fixierungselemente (42, 43) an die entsprechenden Kopplungsaussparungen (62, 63) entlang von jeweiligen Kontaktflächen (65, 66) angrenzen, die im Wesentlichen derart ringförmig sind, um die Dosiereinheit (2; 202; 302; 402; 502) an das Trägermittel (40) anzubinden.

8. Apparatur gemäß einem der vorherigen Ansprüche, wobei die Dosiermittel (50; 250 350; 450; 550) eines aus dem Folgenden aufweisen, nämlich einer volumetrischen Kolbenpumpe, einer peristaltischen Pumpe, einer Diaphragma- oder Membranpumpe, einem Zeit-Druck-Dosiersystem, einem Durchfluss-Steuerungsdosiersystem, einem Flussratenmessdosiersystem, einem volumetrischen Dosiersystem für Pulver oder Granula.

9. Apparatur gemäß einem der vorherigen Ansprüche, wobei die Dosiermittel (50; 250; 350; 450; 550) ein Betriebsmittel aufweisen, das linear entlang einer und/oder drehbar um eine erste Achse (W1) beweglich sind, wobei das Betriebsmittel verbindbar mit und antreibbar durch Bewegungsmittel 101 ist, und insbesondere der Befüllmaschine zugeordnet ist.

10. Apparatur gemäß Anspruch 9, wobei das Betriebsmittel ein Kolbenmittel (3) aufweist, das linear entlang einer und/oder drehbar um eine erste Achse (W1) im Inneren einer Dosierkammer (4) der Gehäusemittel (5) beweglich ist, um eine gewünschte Menge Flüssigkeit von einem Auslass (82) der Gehäusemittel (5) zu entnehmen und die Menge an Flüssigkeit an einen Auslass (83) der Gehäusemittel (5) zu lenken.

11. Apparatur gemäß Anspruch 9 oder 10, wobei die erste Richtung (X) im Wesentlichen parallel zu der ersten Achse (W1) verläuft.

12. Apparatur gemäß einem der Ansprüche 9 bis 11, die Verbindungsmittel (10) aufweist, um ein erstes Endteil (6; 206; 306; 406) des Betriebsmittels lösbar mit dem Bewegungsmittel (101) zu verbinden.

13. Apparatur gemäß einem der Ansprüche 9 bis 12, wobei das Bewegungsmittel (101) erste Bewegungsmittel (201) aufweist, die eingerichtet sind, um das Betriebsmittel um die erste Achse (W1) zu drehen, und/oder zweite Bewegungsmittel (301) aufweist, die eingerichtet sind, um das Betriebsmittel linear entlang der ersten Achse (W1) zu bewegen.

14. Apparatur gemäß einem der Ansprüche 9 bis 13, die ein Anhaltemittel (70; 270; 370; 470) aufweist, um reversibel das Betriebsmittel an die Gehäusemittel (5; 205; 305; 405) in einer definierten linearen und winkligen Position anzubinden und die Dosiereinheit (2, 202; 302; 402; 502) in einem assembliertem Zustand (R) zu halten.

15. Apparatur gemäß Anspruch 14, wobei das Anhaltemittel (70; 270; 370; 470) ein Anschlagsstift (77; 277) aufweist, der gleitend in einem ersten Gehäuse (71; 271) der Gehäusemittel (5; 205; 305; 405) montiert ist und derart beweglich ist, so dass er in dem assemblierten Zustand (R) in ein zweites Gehäuses (73; 273) eingreift, das in dem Betriebsmittel vorgesehen ist.

## Revendications

1. Appareil comprenant une unité de dosage (2 ; 202 ; 302 ; 402 ; 502), pourvu de moyens de carter (5 ; 205 ; 305 ; 405 ; 505) pour supporter et/ou contenir des moyens de dosage (50 ; 250 ; 350 ; 450 ; 550), des moyens de support (40), qui peuvent être associés notamment à une machine de remplissage, pour supporter et verrouiller ladite unité de dosage (2 ; 202 ; 302 ; 402 ; 502) dans une configuration de montage (A), et des moyens de couplage (60) qui sont associés auxdits moyens de carter (5 ; 205 ; 305 ; 405 ; 505) et qui peuvent être insérés de manière coulissante dans ou déconnectés de moyens de guidage (41) desdits moyens de support (40) selon une première direction (X), lesdits moyens de support (40) comprenant des moyens de fixation pour verrouiller lesdits moyens de couplage (60) auxdits moyens de guidage (41) dans ladite configuration de montage (A), dans lequel lesdits moyens de fixation comprennent des éléments de fixation (42, 43) qui sont associés auxdits moyens de guidage (41) et sont sélectivement mobiles de manière à s'engager avec ou se dégager d'encoches de couplage respectives (62, 63) desdits moyens de couplage (60) respectivement pour verrouiller lesdits moyens de couplage (60) auxdits moyens de guidage (41) ou pour libérer lesdits moyens de couplage (60) desdits moyens de guidage (41) et dans lequel il comprend des moyens de poussée (44, 45) agencés pour pousser lesdits éléments de fixation (42, 43) en butée dans les encoches de couplage respectives (62, 63) avec une force de fixation prédéfinie selon une deuxième direction (Y), ladite deuxième direction (Y) étant transversale à ladite première direction (X).

2. Appareil selon la revendication 1, dans lequel lesdits moyens de guidage (41) comprennent une rainure (49) ayant une section transversale conformée et s'étendant parallèlement à ladite première direction (X), lesdits moyens de couplage (60) comprenant un élément de couplage associé auxdits moyens de carter (5 ; 205 ; 305 ; 405 ; 505) et conformé de manière à s'engager de manière coulissante dans ladite rainure (49).

3. Appareil selon la revendication 2, dans lequel lesdits moyens de couplage (60) sont obtenus sur une paroi latérale desdits moyens de carter (5 ; 205 ; 305 ; 405 ; 505).

4. Appareil selon l'une quelconque des revendications précédentes, dans lequel lesdits moyens de carter (5 ; 205) comprennent une portion de préhension (52a ; 252a) pour permettre à ladite unité de dosage (2 ; 202) d'être saisie et manipulée facilement par un opérateur.

5. Appareil selon l'une quelconque des revendications précédentes, dans lequel lesdits moyens de fixation comprennent un premier élément de fixation (42) et un second élément de fixation (43) insérés de manière coulissante respectivement dans une première ouverture (47) et dans une seconde ouverture (48) desdits moyens de guidage (41), l'une desdites ouvertures (47, 48) étant conformée pour permettre à l'élément de fixation respectif (43) de se déplacer selon ladite première direction (X).

6. Appareil selon la revendication 5, dans lequel ladite première ouverture (47) et ladite seconde ouverture (48) sont alignées selon ladite première direction (X).

7. Appareil selon l'une quelconque des revendications précédentes, dans lequel lesdits éléments de fixation (42, 43) viennent en butée dans les encoches de couplage correspondantes (62, 63) le long de surfaces de contact respectives (65, 66) qui sont sensiblement annulaires de manière à verrouiller ladite unité de dosage (2 ; 202 ; 302 ; 402 ; 502) auxdits moyens de support (40).

8. Appareil selon l'une quelconque des revendications précédentes, dans lequel lesdits moyens de dosage (50 ; 250 ; 350 ; 450 ; 550) comprennent l'un parmi une pompe volumétrique à piston, une pompe péristaltique, une pompe à membrane ou diaphragme, un système de dosage temps-pression, un système de dosage à contrôle de flux, un système de dosage à débitmètre, un système de dosage volumétrique pour poudres ou granules.

9. Appareil selon l'une quelconque des revendications précédentes, dans lequel lesdits moyens de dosage (50 ; 250 ; 350 ; 450 ; 550) comprennent des moyens d'actionnement qui peuvent être animés linéairement selon, et/ou en rotation autour de, un premier axe (W1), lesdits moyens d'actionnement pouvant être reliés à et actionnés par des moyens d'animation (101), associés notamment à ladite machine de remplissage.

10. Appareil selon la revendication 9, dans lequel lesdits moyens d'actionnement comprennent des moyens de piston (3) qui peuvent être animés linéairement selon, et/ou en rotation autour de, un premier axe (W1) à l'intérieur d'une chambre de dosage (4) desdits moyens de carter (5) pour prélever une quantité souhaitée de fluide à partir d'une entrée (82) desdits moyens de carter (5) et diriger ladite quantité de fluide vers une sortie (83) desdits moyens de carter (5).

11. Appareil selon la revendication 9 ou 10, dans lequel ladite première direction (X) est sensiblement parallèle audit premier axe (W1).

12. Appareil selon l'une quelconque des revendications 9 à 11, comprenant des moyens d'articulation (10) pour relier de façon amovible une première portion d'extrémité (6 ; 206 ; 306 ; 406) desdits moyens d'actionnement auxdits moyens d'animation (101).

13. Appareil selon l'une quelconque des revendications 9 à 12, dans lequel lesdits moyens d'animation (101) comprennent des premiers moyens d'animation (201) agencés pour entraîner en rotation lesdits moyens d'actionnement autour dudit premier axe (W1) et/ou des seconds moyens d'animation (301) agencés pour déplacer linéairement lesdits moyens d'actionnement selon ledit premier axe (W1).

14. Appareil selon l'une quelconque des revendications 9 à 13, comprenant des moyens d'arrêt (70 ; 270 ; 370 ; 470) pour verrouiller de manière réversible lesdits moyens d'actionnement auxdits moyens de carter (5 ; 205 ; 305 ; 405) dans une position linéaire et angulaire définie et maintenir ladite unité de dosage (2 ; 202 ; 302 ; 402 ; 502) dans un état assemblé (R).

15. Appareil selon la revendication 14, dans lequel lesdits moyens d'arrêt (70 ; 270 ; 370 ; 470) comprennent un pion d'arrêt (77 ; 277) qui est monté de manière coulissante dans un premier logement (71 ; 271) desdits moyens de carter (5 ; 205 ; 305 ; 405) et peut être déplacé pour s'engager dans ledit état assemblé (R) dans un second logement (73 ; 273) réalisé dans lesdits moyens d'actionnement.
